# EUROPÄISCHE PATENTSCHRIFT

(11) **EP 2 354 768 B1**
(45) Veröffentlichungstag und Bekanntmachung des Hinweises auf die Patenterteilung: **21.02.2018**
(21) Anmeldenummer: 11153293.3
(22) Anmeldetag: 04.02.2011
(51) Int. Cl.: G01D 4/00, H04M 11/00, G01R 22/00

(54) **Vorrichtung zum Ablesen von Verbrauchswerten und Kommunikationsverfahren**
Device for reading consumer values and communication method
Dispositif de lecture de valeurs de consommation et procédé de communication

(30) Priorität: 06.02.2010 DE 102010007079
(43) Veröffentlichungstag der Anmeldung: 10.08.2011
(73) Patentinhaber: QUNDIS GmbH, 99098 Erfurt (DE)
(72) Erfinder: Leipold, Jörg, 99974 Mühlhausen (DE); Mattes, Rolf, 78112 St. Georgen (DE); Pröhl, Torsten, 31137 Hildesheim (DE)
(74) Vertreter: Liedtke, Markus

(56) Entgegenhaltungen:
- EP-A1- 0 961 122
- DE-A1- 10 024 544
- DE-A1-102005 061 216

## Beschreibung

Die Erfindung betrifft ein Kommunikationsverfahren für eine Vorrichtung zum Ablesen von Verbrauchswerten nach den Merkmalen des Oberbegriffs des Anspruchs 1.

Derartige Vorrichtungen umfassen zumindest eine Verbrauchswerterfassungseinheit oder eine Mehrzahl von Verbrauchswerterfassungseinheiten, beispielsweise Wasserzähler, Wärmezähler, Stromzähler oder Gaszähler, welche zum Auslesen erfasster Verbrauchsdaten über eine so genannte Meter-Bus Datenschnittstelle, im folgenden als M-Bus bezeichnet, mit einer Zentraleinheit, beispielsweise mit einem so genannten Datensammler, verbunden sind. Des Weiteren können an diesem M-Bus weitere Einheiten angeschlossen sein, beispielsweise weitere Verbrauchswerterfassungseinheiten, andere Datenerfassungseinheiten und/oder Regelgeräte, z. B. Temperatursensoren, Drucksensoren und/oder Aktoren.

Der als M-Bus bezeichnete Meter-Bus ist ein Feldbus für die Verbrauchsdatenerfassung gemäß der Europäischen Norm EN1434 bzw. EN13757.

Detaillierte Informationen zum M-Bus, zu dessen Aufbau und Funktionsweise sind des Weiteren folgenden Veröffentlichungen entnehmbar:
- Kriesel, Werner; Heimbold, Tilo; Telschow, Dietmar:
   Bustechnologien für die Automation.
   Mit CD-ROM. ISBN: 3-7785-2616-2.
   Heidelberg: Hüthig, 1998.
   Kapitel 5.3.5: M-Bus (Euronorm), S. 152-156
- CD-ROM zum Buch:
   Kriesel, Werner; Heimbold, Tilo; Telschow, Dietmar:
      Bustechnologien für die Automation.
      Heidelberg: Hüthig, 1998.
      Abschnitt C.5.3.5: M-Bus (Euronorm)
- Relay GmbH:
   PW001: M-Bus-Slave Pegelwandler RS232C V2.0.
   Firmenschrift, Relay GmbH, Datenblatt PW0001(G), 01.06.2007,
   Version 2.0.
   Paderborn: Relay GmbH, 2007

Die Verbrauchswerterfassungseinheiten werden üblicherweise in galvanischer Trennung zum M-Bus betrieben, um die Gefahr einer Stromeinleitung vom M-Bus über eine Verbrauchswerterfassungseinheit beispielsweise in eine Wasserleitung, in welcher die Verbrauchswerterfassungseinheit installiert ist, zu vermeiden. Daher sind die Verbrauchswerterfassungseinheiten mittels Optokopplern am M-Bus angeschlossen, so dass eine optische Datenübertragung vom M-Bus zu den Verbrauchswerterfassungseinheiten und von den Verbrauchswerterfassungseinheiten zum M-Bus ermöglicht ist.

Aufgrund der galvanischen Trennung ist eine Energieversorgung der Verbrauchwerterfassungseinheiten über den M-Bus nicht möglich. Daher verfügt jede Verbrauchswerterfassungseinheit über eine eigene Energieversorgung, welche durch eine Batterie realisiert wird.

In jeder der Verbrauchswerterfassungseinheiten muss der gesamte Kommunikationsverkehr des M-Busses überwacht werden, um eine Adressierung und Selektierung der jeweiligen Verbrauchswerterfassungseinheit zu erkennen und darauf entsprechend zu reagieren, beispielsweise erfasste Verbrauchsdaten über den M-Bus an die Datenempfangseinheit zu übertragen.

Diese Überwachung geht jedoch zu Lasten der Batteriekapazität der Verbrauchswerterfassungseinheiten. Daher werden so genannte Kommunikationskredits an die Verbrauchswerterfassungseinheiten vergeben, d. h. beispielsweise eine vorgegebene Anzahl von Kommunikationsmengeneinheiten oder von Kommunikationszeiteinheiten, während denen die jeweilige Verbrauchswerterfassungseinheit mit dem M-Bus kommunizieren darf. Sind diese Kommunikationskredits aufgebraucht, stellt die Verbrauchswerterfassungseinheit ihre Kommunikation ein, um ihre Hauptfunktion, das Erfassen von Verbrauchswerten, nicht durch ein vorzeitiges Verbrauchen der Batteriekapazität zu gefährden. Periodisch, zum Beispiel monatlich, werden die Kommunikationskredits nachgeladen.

Die Kommunikationskredits werden aber sowohl durch die Kommunikation des M-Busses mit der Verbrauchswerterfassungseinheit selbst als auch durch die Überwachung der Kommunikation des M-Bus mit allen anderen Einheiten am M-Bus belastet. Damit ist der Rest der Kommunikationskredits, der für die Verbrauchswerterfassungseinheit selbst übrig bleibt, abhängig vom Einsatzfall. Für die Sicherstellung einer immer verfügbaren Verbrauchswerterfassungseinheitskommunikation sind eine großzügige Energiereserve bzw. eine größer dimensionierte Batterie erforderlich oder der Betrieb auf dem M-Bus muss stärker reglementiert werden.

Wenn beispielsweise auf dem M-Bus eine sehr häufige Abfrage von Sensorwerten aus anderen Einheiten erfolgt, aber nur selten Verbrauchswerte der Verbrauchswerterfassungseinheit abgeholt werden müssen, kann bei zu geringen Kommunikationskredits in der Verbrauchswerterfassungseinheit durch
die hohe Last der Sensorabfragen beispielsweise am Monatsende nicht mehr eine Abfrage von Verbrauchswerten sichergestellt werden.

In der EP 0 961 122 A1 wird ein Elektrizitätszähler mit einem einen Mikrocomputer aufweisenden Basis-Elektrizitätszähler, der mit einem oder mehreren austauschbaren Zählerbausteinen bestückt ist, beschrieben. Die Zählerbausteine besitzen wahlweise jeweils eine oder mehrere Ausführungs-Varianten, die sich in ihrer Funktionalität unterscheiden, und weisen jeweils mindestens ein den betreffenden Zählerbaustein und/oder die Ausführungs-Variante kennzeichnendes Identifikations-Merkmal auf. Das letztere ist vom Mikrocomputer des Basis-Elektrizitätszählers lesbar zwecks dortiger Verarbeitung und Interpretation seines Informationsinhaltes oder zwecks Überlassung des Identifikations-Merkmals an eine Applikations-Software des Elektrizitätszählers zur Interpretation des Informationsinhaltes.

Aus der DE 10 2005 061 216 A1 ist ein Verbrauchszähler bekannt, der ein Grundgerät und ein separates Modul zur Übertragung von Daten zu und von dem Grundgerät umfasst. Das Grundgerät enthält nur die für die Eichfähigkeit erforderlichen Komponenten. Grundgerät und Modul sind gegen Umwelteinflüsse geschützt gekapselt. Das Modul besitzt eine Einrichtung zur Zuordnung der Gerätenummer des Grundgeräts zu einem programmierbaren Aliasnamen.

In der DE 100 24 544 A1 wird eine Anordnung zur Fernablesung eines Verbrauchszählers beschrieben. Die Anordnung umfasst eine mit mindestens einem Verbrauchszähler gekoppelte Datenerfassungseinrichtung, die von diesem erhaltenen Verbrauchsdaten eine Absolutzeitgröße zuordnet und daraus Übertragungsdaten erzeugt, welche einander zugeordnete Zeitdaten und Verbrauchsdaten aufweisen. Die Übertragungsdaten werden über eine Fernübertragungsstrecke zu einer Datenbearbeitungseinrichtung gesendet, welche die Verbrauchsdaten abhängig von den Zeitdaten erfasst und auswertet.

Der Erfindung liegt die Aufgabe zu Grunde, ein verbessertes Kommunikationsverfahren für eine Vorrichtung zum Ablesen von Verbrauchswerten anzugeben.

Die Aufgabe wird erfindungsgemäß gelöst durch ein Kommunikationsverfahren für eine Vorrichtung zum Ablesen von Verbrauchswerten mit den Merkmalen des Anspruchs 1.

Eine Vorrichtung zum Ablesen von Verbrauchswerten umfasst zumindest eine Verbrauchswerterfassungseinheit und zumindest eine weitere Einheit, welche über einen M-Bus mit einer Zentraleinheit verbunden sind.

Die zumindest eine Verbrauchswerterfassungseinheit ist über eine Kommunikationseinheit mit dem M-Bus verbunden.

Die vorzugsweise als ein integrierter Schaltkreis oder Mikrorechner ausgebildete Kommunikationseinheit überwacht eine gesamte Kommunikation des M-Busses und leitet nur an die Verbrauchswerterfassungseinheit gerichtete Kommunikation an diese weiter. Auf diese Weise entfällt eine Überwachung der gesamten Kommunikation des M-Busses durch die Verbrauchswerterfassungseinheit selbst, so dass die Verbrauchswerterfassungseinheit in galvanischer Trennung zum M-Bus und mit einer Batterie als Energieversorgung betreibbar ist, da mit dem Entfall der Überwachung der Kommunikation des M-Busses eine erhebliche Reduzierung eines Energiebedarfs und dadurch eine Reduzierung einer Belastung der Batterie der Verbrauchswerterfassungseinheit verbunden ist.

Ausschließlich für die Verbrauchswerterfassungseinheit bestimmte Kommunikation belastet auf diese Weise noch eine Energiebilanz der Verbrauchswerterfassungseinheit. Dadurch ist ein ausreichender Kommunikationsumfang der Verbrauchswerterfassungseinheit mit dem M-Bus sicherstellbar, unabhängig von einem restlichen Kommunikationsbetrieb auf dem M-Bus. Des Weiteren ist die Batterie zur Energieversorgung der Verbrauchswerterfassungseinheit und dadurch auch die Verbrauchswerterfassungseinheit selbst wesentlich kleiner und dadurch kostengünstiger und Bauraum sparender dimensionierbar.

Softwaremäßig übernimmt die Kommunikationseinheit nur Funktionen eines M-Bus-Link-Layers und M-Bus-Network-Layers, d. h. eine Auflösung einer Adressierung und Selektierung. Applikative Funktionen verbleiben in der Kontrolle der Verbrauchswerterfassungseinheit. Damit ist die Kommunikationseinheit in Verbindung mit beliebigen Verbrauchswerterfassungseinheiten mit unterschiedlichen Application-Layern betreibbar.

Die Kommunikationseinheit ist für gültig adressierte oder selektierte Datentelegramme eine so genannte Store- and -forward-Maschine, d. h. es erfolgt eine Durchleitung der Datentelegramme, nötigenfalls mit einer kurzen Zwischenspeicherung, welche allerdings möglichst kurz zu halten ist, um eine minimale Verzögerungszeit sicherzustellen.

Für die angeschlossene Verbrauchswerterfassungseinheit ist die Kommunikationseinheit transparent, d. h. die Verbrauchswerterfassungseinheit empfängt weiterhin an sie gerichtete Datentelegramme vom M-Bus, weitergeleitet von der Kommunikationseinheit, und sendet Datentelegramme an den M-Bus. Nur nicht an sie adressierte Datentelegramme empfängt sie aufgrund der Filterfunktion der Kommunikationseinheit nicht mehr. Daher ist eine Modifikation der Verbrauchswerterfassungseinheit nicht erforderlich, so dass die Verbrauchswerterfassungseinheit nötigenfalls auch ohne die Kommunikationseinheit betreibbar ist.

Die Zentraleinheit ist beispielsweise ein so genannter Datensammler, z. B. in Form eines Computers, in welchem erfasste Verbrauchswerte der Verbrauchswerterfassungseinheiten sammelbar und auswertbar sind. Alternativ ist die Zentraleinheit beispielsweise als Modem ausgebildet, mittels welchem die erfassten Verbrauchswerte zum Beispiel zu einem Wasser- oder Energieversorger weiterleitbar und dort auswertbar sind.

Vorzugsweise ist die Kommunikationseinheit über eine Datensendeleitung, über eine Datenempfangsleitung und über eine Energieversorgungsleitung mit dem M-Bus verbunden. D. h. die Kommunikationseinheit ist vom M-Bus mit Energie versorgbar. Daher ist für die Kommunikationseinheit keine separate Energieversorgung und insbesondere auch keine Energieversorgung über die Verbrauchswerterfassungseinheit erforderlich, so dass die Energieversorgung der Verbrauchswerterfassungseinheit nicht durch die Kommunikationseinheit belastet ist.

Zweckmäßigerweise ist die Verbrauchswerterfassungseinheit mit der Kommunikationseinheit über die Datensendeleitung und die Datenempfangsleitung verbunden, so dass ein bidirektionaler Datenaustausch zwischen der Verbrauchswerterfassungseinheit und der Kommunikationseinheit sichergestellt ist.

Vorzugsweise ist die Verbrauchswerterfassungseinheit von der Kommunikationseinheit galvanisch getrennt, so dass die Gefahr einer Stromeinleitung vom M-Bus über die Verbrauchswerterfassungseinheit beispielsweise in eine Wasserleitung, in welcher die Verbrauchswerterfassungseinheit installiert ist, vermieden ist. Die Kommunikationseinheit ist vor der galvanischen Trennung, noch auf der M-Bus-Seite angeordnet und dadurch vom M-Bus mit Energie versorgbar.

Um sowohl die bidirektionale Datenübertragung als auch die galvanische Trennung zu ermöglichen, ist die Verbrauchswerterfassungseinheit mit der Kommunikationseinheit vorzugsweise mittels zumindest eines Optokopplers verbunden. Der Optokoppler ermöglicht eine optische Datenübertragung von der Verbrauchswerterfassungseinheit zur Kommunikationseinheit und umgekehrt.

In einer bevorzugten Ausführungsform umfasst die Vorrichtung eine Mehrzahl von Verbrauchswerterfassungseinheiten, welche über jeweils eine Kommunikationseinheit mit dem M-Bus verbunden sind. Dadurch sind erfasste Verbrauchswerte mehrerer beispielsweise in einem Gebäude installierter Verbrauchswerterfassungseinheiten über den M-Bus auf die Zentraleinheit, beispielsweise auf den Datensammler übertragbar und in diesem verarbeitbar und auswertbar oder zum Beispiel über ein Modem zur Verarbeitung und Auswertung weiterleitbar.

In einem Kommunikationsverfahren für eine Vorrichtung zum Ablesen von Verbrauchswerten, umfassend zumindest eine Verbrauchswerterfassungseinheit und zumindest eine weitere Einheit, welche über einen M-Bus mit einer Zentraleinheit verbunden sind, überwacht erfindungsgemäß eine Kommunikationseinheit, über welche die zumindest eine Verbrauchswerterfassungseinheit mit dem M-Bus verbunden ist, eine gesamte Kommunikation des M-Busses und leitet nur an die Verbrauchswerterfassungseinheit gerichtete Kommunikation an diese weiter.

Auf diese Weise entfällt eine Überwachung der gesamten Kommunikation des M-Busses durch die Verbrauchswerterfassungseinheit selbst, so dass die Verbrauchswerterfassungseinheit in galvanischer Trennung zum M-Bus und mit einer Batterie als Energieversorgung betrieben werden kann, da mit dem Entfall der Überwachung der Kommunikation des M-Busses eine erhebliche Reduzierung eines Energiebedarfs und dadurch eine Reduzierung einer Belastung der Batterie der Verbrauchswerterfassungseinheit verbunden ist.

Ausschließlich für die Verbrauchswerterfassungseinheit bestimmte Kommunikation belastet auf diese Weise noch eine Energiebilanz der Verbrauchswerterfassungseinheit. Dadurch ist ein ausreichender Kommunikationsumfang der Verbrauchswerterfassungseinheit mit dem M-Bus sicherstellbar, unabhängig von einem restlichen Kommunikationsbetrieb auf dem M-Bus. Des Weiteren ist die Batterie zur Energieversorgung der Verbrauchswerterfassungseinheit und dadurch auch die Verbrauchswerterfassungseinheit selbst wesentlich kleiner und dadurch kostengünstiger und Bauraum sparender dimensionierbar.

Erfindungsgemäß ermittelt die Kommunikationseinheit eine Kennung der mit ihr verbundenen Verbrauchswerterfassungseinheit. Erfindungsgemäß wird die Ermittlung der Kennung der Verbrauchswerterfassungseinheit gestartet, wenn eine Energieversorgung der Kommunikationseinheit durch den M-Bus aktiviert wird. Auf diese Weise kann die Kommunikationseinheit auf einfache Weise zwischen dem M-Bus und der Verbrauchswerterfassungseinheit installiert werden bzw. es können auf einfache Weise Verbrauchswerterfassungseinheiten und zugehörige Kommunikationseinheiten mit dem M-Bus verbunden werden, ohne einen zusätzlichen beispielsweise organisatorischen Aufwand, um die Verbrauchswerterfassungseinheiten anzumelden und eine ordnungsgemäße Kommunikation sicherzustellen.

Ausführungsbeispiele der Erfindung werden im Folgenden anhand einer Zeichnung näher erläutert.

Darin zeigt:

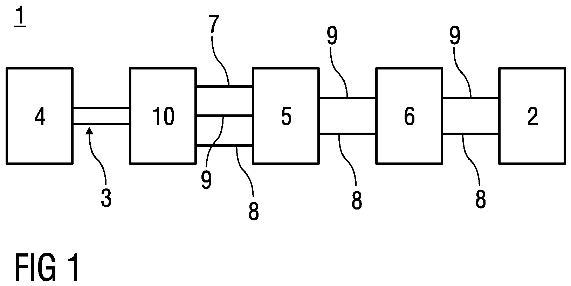

- Figur 1: eine schematische Darstellung einer Vorrichtung zum Ablesen von Verbrauchswerten.

**Figur 1** zeigt eine schematische Darstellung einer Vorrichtung 1 zum Ablesen von Verbrauchswerten, welche im hier dargestellten Beispiel eine Verbrauchswerterfassungseinheit 2 umfasst, die über eine so genannte Meter-Bus Datenschnittstelle, im folgenden als M-Bus 3 bezeichnet, mit einer Zentraleinheit 4 verbunden ist. Der als M-Bus 3 bezeichnete Meter-Bus ist ein Feldbus für die Verbrauchsdatenerfassung gemäß der Europäischen Norm EN1434 bzw. EN13757.

Die Verbrauchswerterfassungseinheit 2 ist beispielsweise ein Wasserzähler, Wärmezähler, Stromzähler oder Gaszähler. Des Weiteren sind an diesem M-Bus 3 eine oder mehrere weitere, hier nicht dargestellte Einheiten angeschlossen, beispielsweise weitere Verbrauchswerterfassungseinheiten, andere Datenerfassungseinheiten und/oder Regelgeräte, z. B. Temperatursensoren, Drucksensoren und/oder Aktoren. Die Zentraleinheit 4 ist beispielsweise ein Datensammler, z. B. in Form eines Computers, in welchem erfasste Verbrauchswerte der Verbrauchswerterfassungseinheiten 2 sammelbar und auswertbar sind. Alternativ ist die Zentraleinheit 4 beispielsweise als Modem ausgebildet, mittels welchem die erfassten Verbrauchswerte zum Beispiel zu einem Wasser- oder Energieversorger weiterleitbar und dort auswertbar sind.

Die Verbrauchswerterfassungseinheit 2 ist über eine beispielsweise als ein integrierter Schaltkreis oder Mikrorechner ausgebildete Kommunikationseinheit 5 mit dem M-Bus 3 verbunden, wobei zwischen der Verbrauchswerterfassungseinheit 2 und der Kommunikationseinheit 5 eine galvanische Trennung 6 realisiert ist, so dass die Gefahr einer Stromeinleitung vom M-Bus 3 über die Verbrauchswerterfassungseinheit 2 beispielsweise in eine Wasserleitung, in welcher die Verbrauchswerterfassungseinheit 2 installiert ist, vermieden ist. Die galvanische Trennung 6 ist vorzugsweise mittels zumindest eines Optokopplers realisiert, über welchen eine bidirektionale optische Datenübertragung ermöglicht ist. Aufgrund der galvanischen Trennung 6 ist eine Energieversorgung der Verbrauchswerterfassungseinheit 2 über den M-Bus 3 nicht möglich. Daher weist die Verbrauchswerterfassungseinheit 2 eine eigene Energieversorgung auf, zweckmäßigerweise in Form einer Batterie.

Aufgrund der Anordnung der Kommunikationseinheit 5 vor der galvanischen Trennung 6, d. h. noch auf der M-Bus-Seite, ist die Kommunikationseinheit 5 vom M-Bus 3 über eine Energieversorgungsleitung 7 mit Energie versorgbar. Daher ist für die Kommunikationseinheit 5 keine separate Energieversorgung und insbesondere auch keine Energieversorgung über die Verbrauchswerterfassungseinheit 2 erforderlich, so dass die Energieversorgung der Verbrauchswerterfassungseinheit 2 nicht durch die Kommunikationseinheit 5 belastet ist.

Die Verbrauchswerterfassungseinheit 2 ist über den Optokoppler mit der Kommunikationseinheit 5 und über diese mit dem M-Bus 3 über eine Datensendeleitung 8 und eine Datenempfangsleitung 9 verbunden, so dass ein bidirektionaler Datenaustausch zwischen der Verbrauchswerterfassungseinheit 2 und der Kommunikationseinheit 5 und über die Kommunikationseinheit 5 und den M-Bus 3 mit der Zentraleinheit 4 sichergestellt ist.

Im hier dargestellten Beispiel ist die Zentraleinheit 4 beispielsweise ein Datensammler in Form eines Computers. Aufgrund dessen ist zwischen der Zentraleinheit 4 und der Kommunikationseinheit 5 ein Pegelwandler 10 erforderlich, um einen M-Bus-speziefischen Spannungspegel zu erzeugen. In weiteren, nicht näher dargestellten Ausführungsformen der Zentraleinheit 4 ist dieser Spannungspegel auch direkt von der Zentraleinheit 4 bereitstellbar, so dass kein zusätzlicher Pegelwandler 10 erforderlich ist.

Mittels des M-Busses 3 ist ein so genanntes Master-Slave-Netzwerk realisiert, wobei die Zentraleinheit 4 bzw. der Pegelwandler 10 der Master ist und die Verbrauchswerterfassungseinheit 2 sowie die weiteren am M-Bus 3 angeschlossenen Einheiten, beispielsweise weitere Verbrauchswerterfassungseinheiten, Regler oder andere Datenerfassungseinheiten die Slaves sind.

Im Kommunikationsverfahren für diese Vorrichtung 1 überwacht die Kommunikationseinheit 5 eine gesamte Kommunikation des M-Busses 3 und filtert diese, d. h. die Kommunikationseinheit 5 leitet nur an die Verbrauchswerterfassungseinheit 2 gerichtete Kommunikation an diese weiter.

Auf diese Weise entfällt eine Überwachung der gesamten Kommunikation des M-Busses 3 durch die Verbrauchswerterfassungseinheit 2 selbst, so dass die Verbrauchswerterfassungseinheit 2 in galvanischer Trennung 6 zum M-Bus 3 und mit einer Batterie als Energieversorgung betrieben werden kann, da mit dem Entfall der Überwachung der Kommunikation des M-Busses 3 eine erhebliche Reduzierung eines Energiebedarfs und dadurch eine Reduzierung einer Belastung der Batterie der Verbrauchswerterfassungseinheit 2 verbunden ist.

Ausschließlich für die Verbrauchswerterfassungseinheit 2 bestimmte Kommunikation belastet auf diese Weise noch eine Energiebilanz der Verbrauchswerterfassungseinheit 2. Dadurch ist ein ausreichender Kommunikationsumfang der Verbrauchswerterfassungseinheit 2 mit dem M-Bus 3 sicherstellbar, unabhängig von einem restlichen Kommunikationsbetrieb auf dem M-Bus 3 mit den anderen am M-Bus 3 angeschlossenen Einheiten. Des Weiteren ist die Batterie zur Energieversorgung der Verbrauchswerterfassungseinheit 2 und dadurch auch die Verbrauchswerterfassungseinheit 2 selbst aufgrund des geringeren Energiebedarfs wesentlich kleiner und dadurch kostengünstiger und Bauraum sparender dimensionierbar.

Vorzugsweise ermittelt die Kommunikationseinheit 5 eine Kennung der mit ihr verbundenen Verbrauchswerterfassungseinheit 2. Bevorzugt wird die Ermittlung der Kennung der Verbrauchswerterfassungseinheit 2 gestartet, wenn die Energieversorgung der Kommunikationseinheit 5 durch den M-Bus 3 aktiviert wird, beispielsweise wenn die Kommunikationseinheit 5 und die Verbrauchswerterfassungseinheit 2 am M-Bus 3 angeschlossen werden. D. h. beim Einschalten einer M-Bus-Spannung fungiert die Kommunikationseinheit 5 kurzzeitig als Master und spricht die Verbrauchswerterfassungseinheit 2 an, diese meldet sich zurück und übermittelt ihre Kennung, d. h. ihre Adresse an die Kommunikationseinheit 5.

Mittels dieser Kennung kann die Kommunikationseinheit 5 die Kommunikation des M-Bus 3 überwachen und die für die Verbrauchswerterfassungseinheit 2 bestimmte Kommunikation herausfiltern und an diese weiterleiten. Nachdem die Kommunikationseinheit 5 die Kennung der Verbrauchwerterfassungseinheit 2 ermittelt hat, ist die Kommunikationseinheit 5 für den Master und die Slaves des M-Bus-Netzwerks, d. h. für die Zentraleinheit 4 bzw. den Pegelwandler 10 und für die Verbrauchswerterfassungseinheit 2 transparent.

Auf diese Weise kann die Kommunikationseinheit 5 auf einfache Weise zwischen dem M-Bus 3 und der Verbrauchswerterfassungseinheit 2 installiert werden bzw. es können auf einfache Weise Verbrauchswerterfassungseinheiten 2 und zugehörige Kommunikationseinheiten 5 mit dem M-Bus 3 verbunden werden, ohne einen zusätzlichen beispielsweise organisatorischen Aufwand, um die Verbrauchswerterfassungseinheiten 2 anzumelden und eine ordnungsgemäße Kommunikation sicherzustellen.

Softwaremäßig übernimmt die Kommunikationseinheit 5 nur Funktionen eines M-Bus-Link-Layers und M-Bus-Network-Layers, d. h. eine Auflösung einer Adressierung und Selektierung. Applikative Funktionen verbleiben in der Kontrolle der Verbrauchswerterfassungseinheit 2. Damit ist die Kommunikationseinheit 5 in Verbindung mit beliebigen Verbrauchswerterfassungseinheiten 2 mit unterschiedlichen Application-Layern betreibbar.

Die Kommunikationseinheit 5 ist für gültig adressierte oder selektierte Datentelegramme von der Zentraleinheit 4 über den M-Bus 3 zur Verbrauchswerterfassungseinheit 2 bzw. von der Verbrauchswerterfassungseinheit 2 über den M-Bus 3 zur Zentraleinheit 4 eine so genannte Store- and -forward-Maschine, d. h. es erfolgt eine Durchleitung der Datentelegramme, nötigenfalls mit einer kurzen Zwischenspeicherung, welche allerdings möglichst kurz zu halten ist, um eine minimale Verzögerungszeit sicherzustellen.

Für die angeschlossene Verbrauchswerterfassungseinheit 2 ist die Kommunikationseinheit 5 transparent, d. h. die Verbrauchswerterfassungseinheit 2 empfängt weiterhin an sie gerichtete Datentelegramme vom M-Bus 3, weitergeleitet von der Kommunikationseinheit 5, und sendet Datentelegramme an den M-Bus 3. Nur nicht an sie adressierte Datentelegramme empfängt sie aufgrund der Filterfunktion der Kommunikationseinheit 5 nicht mehr. Daher ist eine Modifikation der Verbrauchswerterfassungseinheit 2 nicht erforderlich, so dass die Verbrauchswerterfassungseinheit 2 nötigenfalls auch ohne die Kommunikationseinheit 5 betreibbar ist.

### BEZUGSZEICHENLISTE

- 1: Vorrichtung
- 2: Verbrauchswerterfassungseinheit
- 3: M-Bus
- 4: Zentraleinheit
- 5: Kommunikationseinheit
- 6: galvanische Trennung
- 7: Energieversorgungsleitung
- 8: Datensendeleitung
- 9: Datenempfangsleitung
- 10: Pegelwandler

## Patentansprüche

1. Kommunikationsverfahren für eine Vorrichtung (1) zum Ablesen von Verbrauchswerten, umfassend zumindest eine erste Verbrauchswerterfassungseinheit (2) mit einer Energieversorgung zum Betrieb der ersten Verbrauchswerterfassungseinheit (2) und zumindest eine als eine weitere Verbrauchswerterfassungseinheit, als eine andere Datenerfassungseinheit und/oder als ein Regelgerät ausgebildete weitere Einheit, welche über einen M-Bus (3) mit einer Zentraleinheit (4) verbunden sind, wobei die zumindest eine erste Verbrauchswerterfassungseinheit (2) über eine Kommunikationseinheit (5) mit dem M-Bus (3) verbunden ist, **dadurch gekennzeichnet, dass** die Kommunikationseinheit (5) eine gesamte Kommunikation des M-Busses (3) überwacht und nur an die erste Verbrauchswerterfassungseinheit (2) gerichtete Kommunikation an diese weiterleitet, wobei die Kommunikationseinheit (5) eine Kennung der mit ihr verbundenen ersten Verbrauchswerterfassungseinheit (2) ermittelt und wobei die Ermittlung der Kennung der ersten Verbrauchswerterfassungseinheit (2) gestartet wird, wenn eine Energieversorgung der Kommunikationseinheit (5) durch den M-Bus (3) aktiviert wird und wobei die Energieversorgung der Kommunikationseinheit (5) unabhängig von der Energieversorgung der ersten Verbrauchswerterfassungseinheit (2) erfolgt und die Energieversorgung der Kommunikationseinheit (5) vorzugsweise durch den M-Bus (3) erfolgen kann.

## Claims

1. Communication method for an apparatus (1) for reading consumption values, comprising at least one first consumption value recording unit (2), having a power supply for operating the first consumption value recording unit (2), and at least one further unit that is in the form of a further consumption value recording unit, in the form of another data recording unit and/or in the form of a controller and that is connected to a central unit (4) via an M bus (3), wherein the at least one first consumption value recording unit (2) is connected to the M bus (3) via a communication unit (5), **characterized in that** the communication unit (5) monitors an entire communication of the M bus (3) and forwards only communication directed to the first consumption value recording unit (2) to said first consumption value recording unit, wherein the communication unit (5) ascertains an identifier of the first consumption value recording unit (2) connected to it and wherein the ascertainment of the identifier of the first consumption value recording unit (2) is started if a power supply for the communication unit (5) is activated by the M bus (3) and wherein the power supply for the communication unit (5) is provided independently of the power supply for the first consumption value recording unit (2), and the power supply for the communication unit (5) can preferably be provided by the M bus (3).

## Revendications

1. Procédé de communication pour un dispositif (1) destiné à lire des valeurs de consommation, comprenant au moins une première unité d'acquisition de valeurs de consommation (2) comportant une alimentation en énergie permettant de faire fonctionner la première unité d'acquisition de valeurs de consommation (2) et au moins une unité supplémentaire réalisée sous la forme d'une unité d'acquisition de valeurs de consommation supplémentaire, sous la forme d'une autre unité d'acquisition de données et/ou sous la forme d'un appareil de régulation, qui sont reliés à une unité centrale (4) par l'intermédiaire d'un Bus M (3), dans lequel ladite au moins une unité d'acquisition de valeurs de consommation est reliée au bus M (3) par l'intermédiaire d'une unité de communication (5), **caractérisé en ce que** l'unité de communication (5) surveille la totalité des communications du bus M (3) et lui transmet uniquement les communications destinées à la première unité d'acquisition de valeurs de consommation (2), dans lequel l'unité de communication (5) détermine un identificateur de la première unité d'acquisition de valeurs de consommation (2) qui lui est reliée et dans lequel la détermination de l'identificateur de la première unité d'acquisition de valeurs de consommation (2) est lancée lorsqu'une alimentation en énergie de l'unité de communication (5) est activée par le Bus M (3) et dans lequel l'alimentation en énergie de l'unité de communication (5) s'effectue indépendamment de l'alimentation en énergie de la première unité d'acquisition de valeurs de consommation (2), et l'alimentation en énergie de l'unité de communication (5) peut de préférence être effectuée par l'intermédiaire du Bus M (3).
